# EUROPEAN PATENT APPLICATION

(11) **EP 2 990 641 A1**
(43) Date of publication of application: **02.03.2016**
(21) Application number: 13874482.6
(22) Date of filing: 12.08.2013
(51) Int. Cl.: F03B 17/02

(54) **SUSPENSION ROTARY WATER PRESSURE ENERGY CONVERSION POWER OUTPUT DEVICE**

(30) Priority: 08.02.2013 CN 201310050275
(71) Applicant: Zhang, Weiguo, Jiangxi 330096 (CN)
(72) Inventor: Zhang, Weiguo, Jiangxi 330096 (CN)
(74) Representative: Sun, Yiming
(86) International application number: PCT/CN2013/081283
(87) International publication number: WO 2014/121595

(57) **Abstract**

A suspension rotary water pressure energy conversion power output device. The device comprises energy converters (2) fixed to a rotating shaft (6), a ring shape frame (1) being concentric with and fixed to the rotating shaft (6), a turnover mechanism (3), a supporting base (4) and a hydraulic transmission mechanism. At least three energy converters (2) are radially and uniformly arranged around the rotating shaft (6). The ring shape frame (1) is driven by the turnover mechanism (3) to rotate. The device is arranged in the water in a microgravity suspension state, the device is circularly and continuously rotated around the rotating shaft under smaller external force. During the rotation, the floating energy is converted to hydraulic energy by releasing a floating buoy. By multiple said devices used in combination, the hydraulic oil is pressed into a high-pressure oil accumulator continuously to be used directly or for electric power generation in a hydraulic generator.

## Description

### FIELD OF THE TECHNOLOGY

The present invention relates to a Hydroenergy conversion device of energy conversion equipment, and particularly to a suspension rotary water pressure energy conversion power output device.

### TECHNOLOGY BACKGROUND

Hydroenergy is a renewable and clean energy. Hydroenergy refers to energy resources such as kinetic energy, potential energy and pressure energy of a body of water. Currently, Hydroenergy applications only make use of kinetic energy and potential energy of water. Hydropower is a typical and single use of kinetic energy and potential energy of water to generate power. Hydropower has the problems of difficulty in construction, high installation cost, low controllability, and low efficiency in power generation. As a clean and renewable energy, in addition to kinetic energy and potential energy, hydroenergy in fact possesses enormous pressure energy. This pressure energy can be utilized to significantly improve hydroenergy operation efficiency and to serve the humanity. In today's increasing shortage of energy, we can take full advantage of the development of conversion of water pressure energy to hydraulic energy, or use the pressure energy to generate electricity. It is cost effective and has far-reaching social significance.

Chinese Patent CN200820089479.0 provided a float-type power-generating device. The main structure is characterized by having at least two or more single set of power-generating device. Each single set of power-generating device includes water tank, float, piston, and hydraulic cylinder. The float is placed in the water tank formed with a water inlet and a water outlet. The float is connected with the piston through a connecting rod. The piston is provided inside the hydraulic cylinder. The body of the hydraulic cylinder is fixed to the water tank by a fixing frame. The hydraulic cylinder is connected with a generator via a hydraulic pump. An oil tank is provided on an oil return passage between the hydraulic cylinder and the hydraulic pump. A one-way valve is provided on an oil passage between the hydraulic cylinder and the oil tank.

Another one-way valve is provided on an oil passage between the hydraulic pump and the oil tank. Although the structure of the device is simple, it is not suitable for industrial production of electricity. Since water flow must have to be ensured during production process, it limits the geographical environment usage of the invention. Also, in each process of water filling and water draining, the generated hydraulic energy is not continuous, and therefore it exists the shortcomings of poor operability and controllability.

### DISCLOSURE OF THE INVENTION

The technical problem to be solved is to provide a high efficient power output device which is simple in structure, easy to operate, low in friction and wearing, higher in energy conversion efficiency, more stable and reliable, and able to make better use of various forms of water energy, especially water pressure energy that can be converted into industrial hydraulic power.

The present invention can solve the above-mentioned existing technical problems through the implementation of the below technical solutions.

The present invention includes a supporting base, a rotating shaft, energy converters, and a hydraulic transmission mechanism, characterizing in that at least three energy converters 2 are radially and uniformly provided inside a ring-shaped frame 1 which is concentric with the rotating shaft 6 provided on the supporting base 4. The ring-shaped frame 1 is driven to rotate by a turnover mechanism3. The transmission mechanism includes a hydraulic cylinderhydraulic cylinder 19, one-way valves 24, 25, oil pipes 26, 27, a hydraulic oil tank 11, a high-pressure oil accumulator 12 and a hydraulic actuator 5.

To achieve a better operating effect, the following technical solutions can also be implemented.

The rotating shaft 6 has a hollow center. A high-pressure oil inlet pipe 28 connecting with oil inlets A passes through a hollow portion at one end of the rotating shaft 6 and connects with a hydraulic oil tank 11 through a rotary joint 9, and a high-pressure oil outlet pipe 29 connecting with oil outlets B passes through a hollow portion at the other end of the rotating shaft 6 and connects with a high-pressure oil accumulator 12 through a second rotary joint 10. The number of the energy converters 2 can be an odd number greater than three. An oil pipe 27 at the oil outlet B of each energy converter 2 is provided with a hydraulic valve 7, and a hydraulic valve control device 8 is provided on an upper part of the ring-shaped frame 1. The hydraulic valve 7 can be a magnetically-controlled hydraulic valve, and the hydraulic valve control device 8 can be a magnetically-controlled hydraulic valve control device. The hydraulic valve 7 can be a mechanically-controlled hydraulic valve, and the hydraulic valve control device 8 can also be a mechanically-controlled hydraulic valve control device. The hydraulic valve control device 8 is disposed at an angle of ±5°∼±20° with respect to a vertical axis of the ring-shaped frame 1. The turnover mechanism 3 includes a ring-shaped driving gear 14 provided on an outer side of the ring-shaped frame 1, and a driving motor 13 with a mating gear which is provided at an outer portion of the ring-shaped driving gear 14 and engageable therewith. The driving motor 13 with the mating gear is a passively-operating power-generating electric motor. The turnover mechanism 3 includes a ring-shaped blade set 15 provided on an outer side of the ring-shaped frame 1. The rotating shaft 6, the ring-shaped frame 1 or the energy converters 2 is provided with a counterweight 16 to counteract the buoyancy of the floating buoy. This renders the entire device, including the counterweight 16, the rotating shaft 6, the ring-shaped frame 1 and the energy converters 2, to be in a microgravity suspension state in water.

The present invention uses counterweight to make the entire device, except for the supporting base 4, to be in microgravity suspension state in water. With the aid of small kinetic energy, potential energy, or smaller external force of water, the entire device can be rotated. Also, the entire device can be rotated by a driving motor so as to result in the energy converters being turned upside down. During rotation process, floating buoys release pressure energy of water to realize the conversion of hydraulic energy. Multiple set of devices can be combined in order to continuously press hydraulic oil into a high-pressure oil accumulator for direct use, or for use in hydraulic power generation etc.

### BRIEF DESCRIPTION OF THE DRAWINGS

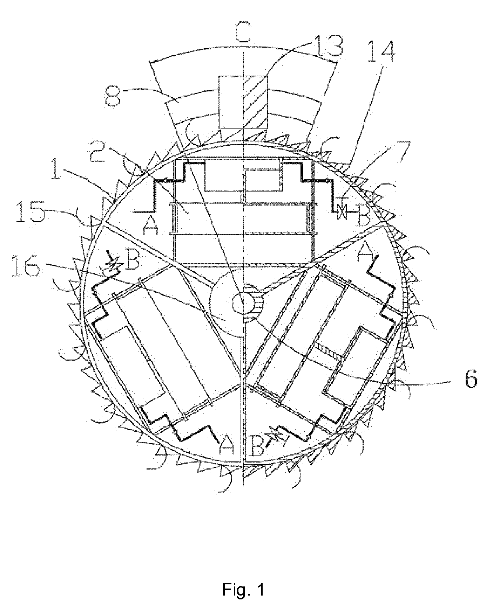

Fig. 1 is a left side half-sectional view of the first embodiment of the present invention;

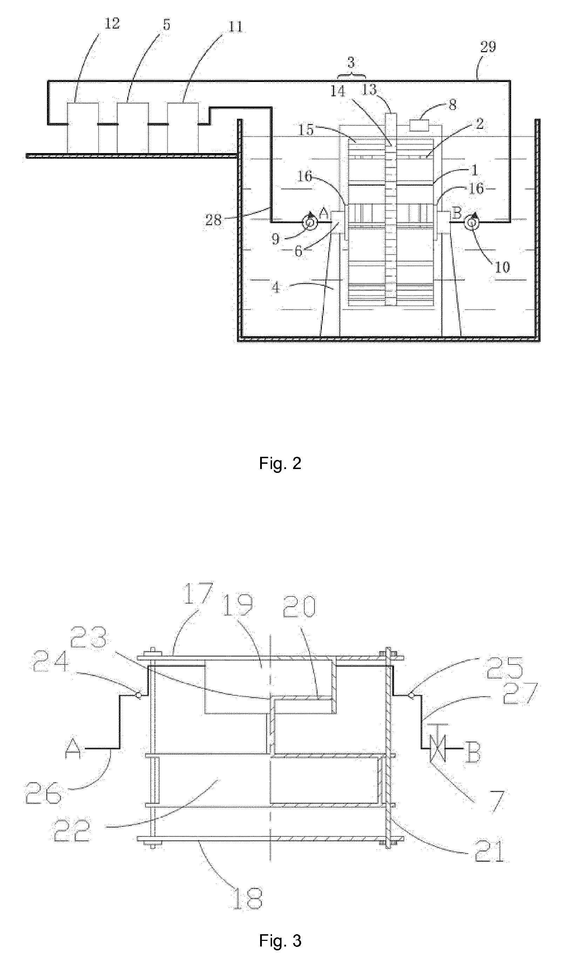

Fig. 2 is an illustrative diagram of the structure of the first embodiment of the present invention;
Fig. 3 is an illustrative diagram of the structure of an energy converter of the first embodiment of the present invention;

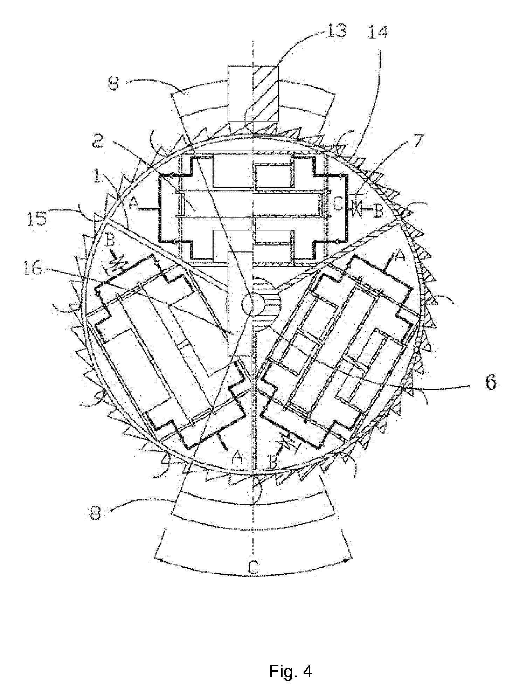

Fig. 4 is a left side half-sectional view of the second embodiment of the present invention; and

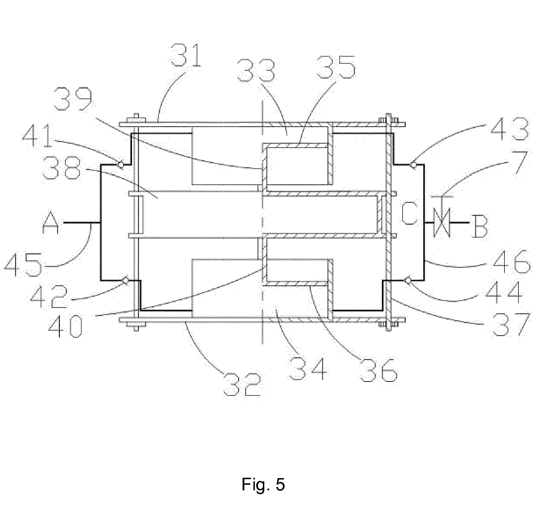

Fig. 5 is an illustrative diagram of the structure of an energy converter of the second embodiment of the present invention.

### BEST EMBODIMENTS EMBODYING THE INVENTION

The present invention will be described by way of the following accompanying embodiments.

### Embodiment 1

The device of the present invention includes energy converters 2 fixedly connected with a rotating shaft 6, a ring-shaped frame 1 coaxial and fixedly connected with the rotating shaft 6, a turnover mechanism 3, a supporting base 4, and a hydraulic transmission mechanism. The transmission mechanism includes a hydraulic cylinder 19, one-way valves 24, 25, oil pipes 26, 27, a hydraulic oil tank 11, a high-pressure oil accumulator 12 and a hydraulic actuator 5.

The energy converter 2 includes a floating buoy 22, upper and lower base plates 17, 18, the hydraulic cylinder 19, and a piston 20. The upper and lower base plates 17, 18 are fixedly connected together by at least two fixation rods 21. The hydraulic cylinder 19 is mounted on the upper base plate 17. An upper end of the floating buoy 22 is provided with a connecting rod 23, which is connected with the piston 20 of the hydraulic cylinder 19. The floating buoy 22 and the fixation rods 21 are movably connected by linear bearings. The floating buoy 22 can slide along the fixation rods 21. Oil inlet of the hydraulic cylinder 19 is provided with the one-way valve 24, and is connected with an oil inlet A through the oil pipe 26. Oil outlet of the hydraulic cylinder 19 is provided with the one-way valve 25, and is connected with an oil outlet B through the oil pipe 27 and a magnetically-controlled hydraulic valve 7.

The ring-shaped frame 1 is fixedly connected with the rotating shaft 6. Three energy converters 2 are radially and uniformly provided around the rotating shaft 6 inside the ring-shaped frame 1. The rotating shaft 6 is fixed on the supporting base 4 through a pair of underwater bearings. The rotating shaft 6 has a hollow center. A high-pressure oil inlet pipe 28 connecting with the oil inlets A of the three sets of energy converters 2 passes through a hollow portion at one end of the rotating shaft 6 through a rotary joint 9. A high-pressure oil outlet pipe 29 connecting with the oil outlets B of the three sets of energy converters 2 passes through a hollow portion at the other end of the rotating shaft 6 through a rotary joint 10.

A magnetically-controlled hydraulic valve control device 8 is provided on the supporting base 4 directly above the ring-shaped frame 1. The magnetically-controlled hydraulic valve control device 8 is coaxial with the rotating shaft 6, and is disposed at an angle of ±20° with respect to a vertical axis of the ring-shaped frame 1. That means the magnetically-controlled hydraulic valve control device 8 has a radian of 40°. The turnover mechanism 3 includes a ring-shaped driving gear 14 provided on an outer side of the ring-shaped frame 1, and a driving motor 13 with a mating gear which is provided at an outer portion of the ring-shaped driving gear 14 and engageable therewith. The outer side of the ring-shaped frame 1 is provided with a ring-shaped blade set 15 which is coaxial with the rotating shaft 6.

To achieve a better operation effect and reduce energy input of the driving motor 13, a counterweight 16 is provided on the rotating shaft 6 and the energy converters 2 so as to counteract the buoyancy of the floating buoys 22 of the energy converters 2. This renders the entire device, except for the supporting base 4, to be in a microgravity suspension state in water.

The present invention is implemented this way. Pre-operation equipment is first installed. The supporting base 4 is fixed vertically. The entire device, including the three energy converters 2 fixedly connected with the rotating shaft 6, is submerged in water. Two ends of the rotating shaft 6 are mounted on the supporting base 4 by the pair of underwater bearings respectively. The ring-shaped driving gear 14 coaxial with the rotating shaft 6 is just exposed above the water surface, and engageable with the mating gear of the driving motor 13. The counterweight 16 makes the weight of the entire device, including the counterweight 16, the rotating shaft 6, the ring-shaped frame 1 and the energy converters 2 equals to the buoyancy in water. This renders the entire device, except for the supporting base 4, to be in a microgravity suspension state in water. When the device is in operation, the driving motor 13 with the mating gear drives the ring-shaped driving gear 14, which is coaxial with the rotating shaft 6. This causes the energy converters 2 to rotate around the rotating shaft 6. When one of the energy converters 2 rotates to an operating range of the upper magnetically-controlled hydraulic valve control device 8, the hydraulic cylinder 19 is above the floating buoy 22. This renders the opening of the magnetically-controlled hydraulic valve 7 provided at the oil outlet B. The floating buoy 22 moves upwards under the influence of strong buoyancy of the floating buoy 22, and pushes the piston 20 of the hydraulic cylinder 19. Guiding by the one-way valves 24, 25, hydraulic oil flows through the oil pipe 27 and the magnetically-controlled hydraulic valve 7, passes through the oil outlet B, the rotary joint 10, the high-pressure oil outlet pipe 29, and then presses into the high-pressure oil accumulator 12. When the energy converter 2 rotates out of the operating range of the magnetically-controlled hydraulic valve control device 8, the magnetically-controlled hydraulic valve 7 is closed. When the energy converter 2 rotates to a lower portion of the ring-shaped frame 1, the hydraulic cylinder 19 is underneath the floating buoy 22. The floating buoy 22 moves upwards under the influence of strong buoyancy of the floating buoy 22. The piston 20 of the hydraulic cylinder 19 also moves upwards under the influence of the pulling force of the floating buoy 22. Guiding by the one-way valves 24, 25, and flowing through the high-pressure oil inlet pipe 28, the rotary joint 9, the oil inlet A, and hydraulic oil inside the hydraulic oil tank 11 is sucked into the hydraulic cylinder 19 through the oil pipe 26. This completes an operating process.

The device continues to rotate and enter into the next operating cycle. This repeats again and again. The energy converters 2 repeat their operation and continue to generate hydraulic energy.

High-pressure hydraulic oil enters the high-pressure oil accumulator 12 with the use of an optimized combination of an odd number of greater than three energy converters 2 rotating around the rotating shaft 6, or an optimized combination of a multiple set of suspension rotary water pressure energy conversion power output devices. High-pressure oil outlet of the high-pressure oil accumulator 12 connects with the hydraulic actuator 5 and operates externally. The hydraulic oil discharged from the hydraulic actuator 5 after back pressure adjustment returns to the hydraulic oil tank 11 again. This completes a closed cycle system of the hydraulic oil, and completes a cycle of power transmission. The hydraulic actuator 5 can be a hydraulic power generator which converts hydraulic energy into electrical energy. The hydraulic actuator 5 can also be a hydraulic cylinder which converts hydraulic energy into mechanical energy. The hydraulic valve 7 can be a mechanically-controlled hydraulic valve. The hydraulic valve control device 8 can also be a mechanically-controlled hydraulic valve control device. Considering the suspension rotary water pressure energy conversion power output device as a single unit, multiple units can be combined and used to continuously generate more steady hydraulic energy.

### Embodiment 2

The structure of the energy converter in embodiment 2 is different from that of embodiment 1. The energy converter 2 includes a floating buoy 38, upper and lower base plates 31, 32, two opposite hydraulic cylinders 33, 34 with pistons 35, 36 provided on the upper and lower base plates 31, 32 respectively. The upper and lower base plates 31, 32 are fixedly connected together by at least two fixation rods 37. Upper and lower ends of the floating buoy 38 are provided with connecting rods 39, 40 respectively, which are connected with the pistons 35, 36 of the two hydraulic cylinders 33, 34 mounted on the upper and lower base plates 31, 32 respectively. The floating buoy 38 is movably connected with the fixation rods 37 by linear bearings. The floating buoy 38 can slide along the fixation rods 37. Oil inlet ends of the two hydraulic cylinders 33, 34 are provided with one-way valves 41, 42 respectively, and are connected with oil inlet A through an oil pipe 45. Oil outlet ends of the two hydraulic cylinders 33, 34 are provided with one-way valves 43, 44 respectively, and are connected with one side of an oil outlet B through an oil pipe 46. The other side of the oil outlet B is provided with a hydraulic valve 7.

Upper and lower hydraulic valve control devices 8 are provided on the supporting base 4 directly above and below the ring-shaped frame 1 respectively. The upper and lower hydraulic valve control devices 8 are coaxial with the rotating shaft 6, and are disposed at an angle of ±5° with respect to a vertical axis of the ring-shaped frame 1. That means the hydraulic valve control devices 8 have a radian of 10°. The hydraulic valve 7 can be magnetically-controlled, and the hydraulic valve control device 8 can also be magnetically-controlled. The hydraulic valve 7 can be mechanically-controlled, and the hydraulic valve control device 8 can also be mechanically-controlled.

A counterweight 16 is provided on the rotating shaft 6 and the energy converters 2 so as to counteract the buoyancy of the floating buoy of the energy converters 2. This renders the entire device, including the counterweight 16 and the energy converters 2, to be in a microgravity suspension state in water.

When the device is in operation, the driving motor 13 with the mating gear drives the ring-shaped driving gear 14, which is coaxial with the rotating shaft 6. This causes the energy converters 2 to rotate around the rotating shaft 6. When the energy converters 2 rotate to operating ranges of the upper and lower hydraulic valve control devices 8, the floating buoy is released to operate. When the energy converters 2 rotate a circle in the device, the upper and lower hydraulic cylinders are released to operate a second time. Its efficiency is higher than that of the embodiment 1. The production of high-pressure hydraulic oil is more stable. The rest of the device of embodiment 2 is the same as that of embodiment 1.

Furthermore, the potential energy of the body of water can drive the energy converters 2 to rotate around the rotating shaft 6. The device of the present invention can be installed like the structure of an impulse turbine. An intake basin leads fluid to a tiny hydraulic head which is connected with a nozzle through a pressurized water pipe. Fluid from the nozzle continuously hits against the ring-shaped blade set 15 coaxial with the rotating shaft 6. The angle of the nozzle is adjusted so as to ensure efficient usage of jet-flow energy. Because of the use of the counterweight 16, the rotating shaft 6 and energy converters 2 are entirely in a microgravity suspension state in water. Small amount of jet-flow energy can drive the energy converters 2 to rotate around the rotating shaft 6. Through the increase and decrease of the number of nozzles, the angle of the nozzles and the distance of the jet-flow, the speed of rotation of the energy converters 2 around the rotating shaft 6 can remain steady. The present device can realize the conversion of water pressure power energy to hydraulic energy. At this time, the ring-shaped driving gear 14 can be separated from the mating gear of the driving motor 13.

Hydroenergy resource (hydraulic resource) is energy resource stored in the body of water in the form of potential energy, pressure energy and kinetic energy. The kinetic energy of water flow can drive the energy converters 2 to rotate around the rotating shaft 6 through the ring-shaped blade set 15. Small amount of water flow can drive the energy converters 2 to rotate around the rotating shaft 6 so long as flowing water source is introduced or the device is installed in water with water flow, and the entire device, except for the supporting base 4, is in a microgravity suspension state in water. So long as the flow of water is properly controlled, the speed of rotation of the energy converters 2 around the rotating shaft 6 can remain steady. The present device can realize the conversion of water pressure power energy to hydraulic energy. At this time, the ring-shaped driving gear 14 can be separated from the mating gear of the driving motor 13.

The kinetic energy of the body of water can drive the energy converters 2 to rotate around the rotating shaft 6. At this time, the ring-shaped driving gear 14 and the driving motor 13 with the mating gear that is engageable with the ring-shaped driving gear 14 form a constant speed device. It can keep the speed of rotation of the energy converters 2 around the rotating shaft 6 steady. When kinetic energy of the body of water is too weak to push the energy converters 2 around the rotating shaft 6, the driving motor 13 with the mating gear of the constant speed device can supplement the operation. When the water power is too strong and the floating buoys 22 of the energy converters 2 cannot complete a cycle, the driving motor 13 with the mating gear operates and changes into a power generator that generates extra power. At the same time, it can exert resistance force against the rotation of the energy converters 2 around the rotating shaft 6 in order to keep the rotation of the energy converters 2 around the rotating shaft 6 steady. The present device can realize the conversion of water pressure power energy to hydraulic energy. The driving motor 13 with the mating gear can be a rare earth permanent magnet motor with the mating gear.

### Embodiment 3

The device of the present invention can be installed in a water reservoir. The device of the present invention includes a supporting base, a rotating shaft, energy converters and a hydraulic transmission mechanism. At least three energy converters 2 are radially and uniformly arranged inside a ring-shaped frame 1 concentric with and fixed to the rotating shaft 6. The transmission mechanism includes a hydraulic cylinder 19, one-way valves 24, 25, oil pipes 26, 27, a hydraulic oil tank 11, a high-pressure oil accumulator 12 and a hydraulic actuator 5. The turnover mechanism 3 is directly connected to the rotating shaft 6 to directly drive the rotating shaft 6. The energy converter 2 fixedly connected with the rotating shaft 6, the ring-shaped frame 1 which is coaxial and fixedly connected with the rotating shaft 6, the turnover mechanism 3 and the supporting base 4 are all disposed under water. The counterweight 16 makes the weight of the entire device, including the counterweight 16, the rotating shaft 6, the ring-shaped frame 1 and the energy converter 2 equals to the buoyancy in water. This renders the entire device, except for the supporting base 4, to be in a microgravity suspension state in water.

Four energy converter 2 are marked with I#, II#, III#, IV# respectively. Oil inlets A and oil outlets B of the four energy converter 2 are converged into the I# energy converter 2 through oil pipe.

When the I# energy converter 2 moves to the lowest end and the III# energy converter 2 moves to the highest end, the floating buoys of the I# and III# energy converters 2 are respectively and automatically released to their highest regions, and press high-pressure hydraulic oil into the high-pressure oil accumulator 12. At this time, the turnover mechanism 3 rotates in the opposite direction. When the I# energy converter 2 moves 90 degrees in the opposite direction, the II# energy converter 2 moves to the highest end of the device and the IV# energy converter 2 moves to the lowest end of the device. The II# and IV# energy converters 2 are automatically released to their highest regions, and press high-pressure hydraulic oil into the high-pressure oil accumulator 12. When the I# energy converter 2 accumulatively moves 180 degrees in the opposite direction, the I# energy converter 2 moves to the highest end of the device and the III# energy converter 2 moves to the lowest end of the device. At this time, the floating buoys of the I# and III# energy converters 2 are respectively and automatically released to their highest regions, and press high-pressure hydraulic oil into the high-pressure oil accumulator 12. When the I# energy converter 2 accumulatively moves 270 degrees in the opposite direction, the IV# energy converter 2 moves to the highest end of the device and the II# energy converter 2 moves to the lowest end of the device. The II# and IV# energy converters 2 are automatically released to their highest regions, and press high-pressure hydraulic oil into the high-pressure oil accumulator 12. When the I# energy converter 2 accumulatively moves 360 degrees in the opposite direction, the I# energy converter 2 moves to the lowest end of the device and the III# energy converter 2 moves to the highest end of the device. At this time, the floating buoys of the I# and III# energy converters 2 are respectively and automatically released to their highest regions, and press high-pressure hydraulic oil into the high-pressure oil accumulator 12. At this time, the turnover mechanism 3 changes its rotation direction again. This repeats again and again. By controlling the rotation speed of the turnover mechanism 3, the four energy converters 2 can move and complete the entire operating journey.

To achieve better technical effect, hollow rotating shaft 6 can be used so that the oil pipes of the transmission mechanism can respectively connect with the hydraulic cylinder and the hydraulic oil tank 11 of the energy converter 2, and the high-pressure oil accumulator 12.

## Claims

1. A suspension rotary water pressure energy conversion power output device, comprising a supporting base, a rotating shaft, energy converters, and a hydraulic transmission mechanism, **characterized in that** at least three energy converters are radially and uniformly provided inside a ring-shaped frame which is concentric with the rotating shaft provided on the supporting base, the ring-shaped frame being driven to rotate by a turnover mechanism.

2. The suspension rotary water pressure energy conversion power output device as claimed in claim 1, **characterized in that** the rotating shaft has a hollow center.

3. The suspension rotary water pressure energy conversion power output device as claimed in claim 2, **characterized in that** a high-pressure oil inlet pipe connecting with oil inlets A of the energy converters passes through a hollow portion at one end of the rotating shaft and connects with a hydraulic oil tank through a rotary joint, and a high-pressure oil outlet pipe connecting with oil outlets B of the energy converters passes through a hollow portion at the other end of the rotating shaft and connects with a high-pressure oil accumulator through a rotary joint.

4. The suspension rotary water pressure energy conversion power output device as claimed in claim 1 or 2, **characterized in that** the number of the energy converters is an odd number greater than three.

5. The suspension rotary water pressure energy conversion power output device as claimed in claim 1 or 2, **characterized in that** an oil pipe at the oil outlet B of each energy converter is provided with a hydraulic valve; and a hydraulic valve control device is provided on an upper part of the ring-shaped frame.

6. The suspension rotary water pressure energy conversion power output device as claimed in claim 1 or 2, **characterized in that** the hydraulic valve is a magnetically-controlled hydraulic valve; and the hydraulic valve control device is a magnetically-controlled hydraulic valve control device.

7. The suspension rotary water pressure energy conversion power output device as claimed in claim 1 or 2, **characterized in that** the turnover mechanism comprises a ring-shaped driving gear provided on an outer side of the ring-shaped frame, and a driving motor with a mating gear which is provided at an outer portion of the ring-shaped driving gear and engageable therewith.

8. The suspension rotary water pressure energy conversion power output device as claimed in claim 7, **characterized in that** the driving motor with the mating gear is a passively-operating power-generating electric motor.

9. The suspension rotary water pressure energy conversion power output device as claimed in claim 1 or 2, **characterized in that** the turnover mechanism comprises a ring-shaped blade set provided on an outer side of the ring-shaped frame.

10. The suspension rotary water pressure energy conversion power output device as claimed in claim 1 or 2, **characterized in that** the rotating shaft and the energy converters are provided with a counterweight.
